(19)

**Europäisches Patentamt**
**European Patent Office**
**Office européen des brevets**

(11) **EP 3 704 276 B1**

(12) **EUROPEAN PATENT SPECIFICATION**

(45) Date of publication and mention
of the grant of the patent:
**21.09.2022 Bulletin 2022/38**

(21) Application number: **18807182.3**

(22) Date of filing: **02.11.2018**

(51) International Patent Classification (IPC):
***C21D 1/19*** *(2006.01)*   ***C21D 1/22*** *(2006.01)*
***C21D 1/673*** *(2006.01)*

(52) Cooperative Patent Classification (CPC):
**B23K 35/3073; B23K 35/3086; C21D 1/19;**
**C21D 1/22; C21D 1/673; C21D 6/002; C21D 6/005;**
**C21D 6/008; C22C 38/02; C22C 38/04;**
**C22C 38/22; C22C 38/24; C22C 38/26;**
**C22C 38/28; C22C 38/32;**                (Cont.)

(86) International application number:
**PCT/US2018/059006**

(87) International publication number:
**WO 2019/090113 (09.05.2019 Gazette 2019/19)**

(54) **PRESS HARDENED STEEL WITH TAILORED PROPERTIES AFTER NOVEL THERMAL TREATMENT**

PRESSGEHÄRTETER STAHL MIT MASSGESCHNEIDERTEN EIGENSCHAFTEN NACH NEUARTIGER WÄRMEBEHANDLUNG

ACIER ESTAMPÉ À CHAUD AYANT DES PROPRIÉTÉS PARTICULIÈRES APRÈS UN TRAITEMENT THERMIQUE INNOVANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.11.2017 US 201762580662 P**

(43) Date of publication of application:
**09.09.2020 Bulletin 2020/37**

(73) Proprietor: **Cleveland-Cliffs Steel Properties Inc.**
**West Chester, OH 45069 (US)**

(72) Inventors:
• **PAVLINA, Erik, James**
**Lebanon**
**OH 45036 (US)**
• **TATE, Stephen, Bryant**
**Cincinnati**
**OH 45247 (US)**
• **THOMAS, Grant, Aaron**
**Liberty Township**
**OH 45011 (US)**

(74) Representative: **Samson & Partner Patentanwälte mbB**
**Widenmayerstraße 6**
**80538 München (DE)**

(56) References cited:
**WO-A1-2012/120020     WO-A1-2013/004910**

• **BRUNO C. DE COOMAN ET AL: "Quench and Partitioning Steel: A New AHSS Concept for Automotive Anti-Intrusion Applications", STEEL RESEARCH INTERNATIONAL., vol. 77, no. 9-10, 1 September 2006 (2006-09-01), pages 634-640, XP055534234, DE ISSN: 1611-3683, DOI: 10.1002/srin.200606441**
• **KIM S J ET AL: "Dilatometric study of the Quench and Partitioning (Q&P) process", AIST STEEL PROPERTIES & APPLICATIONS CONFERENCE PROCEEDINGS : COMBINED WITH MS & T '07, MATERIALS SCIENCE AND TECHNOLOGY 2007 ; SEPTEMBER 16 - 20, 2007, DETROIT, MICH, AMERICAN CERAMIC SOCIETY, USA, 1 January 2007 (2007-01-01), pages 73-83, XP009182792, ISBN: 978-1-886362-94-7**

- **JOHN G SPEER ET AL: "Analysis of Microstructure Evolution in Quenching and Partitioning Automotive Sheet Steel", METALLURGICAL AND MATERIALS TRANSACTIONS A, SPRINGER-VERLAG, NEW YORK, vol. 42, no. 12, 15 September 2011 (2011-09-15), pages 3591-3601, XP035070015, ISSN: 1543-1940, DOI: 10.1007/S11661-011-0869-7**

(52) Cooperative Patent Classification (CPC): (Cont.)
**C22C 38/38**

**Description**

**Background**

This application claims priority to U.S. Provisional Patent Application No. 62/580,662 entitled "Press Hardened Steel with Tailored Properties After Novel Thermal Treatment," filed on November 2, 2017.

Press hardened steels are produced via a hot stamping process in which the steel is deformed at high temperatures at which austenite is stable and then quenched in the stamping die at sufficient cooling rates such that martensite is formed. These steels are typically used in structural members in automotive applications where high strength and high intrusion resistance are required. Press hardened steels with tailored properties are attractive because they can provide both high intrusion resistance in addition to high energy absorption as the result of relatively hard and soft areas in the component. Tailored properties may be obtained through the use of tailor-welded blanks, which are blanks composed of two (or more) steel sheets with different compositions or thicknesses.

Typical commercial press hardened steels (for example, 22MnB5) have ultimate tensile strengths of approximately 1500 MPa with total elongations of approximately 6-8%. Conventional press hardened steel sheets may be joined to a steel with lower hardenability, and which transforms to a softer microstructure (ultimate tensile strengths of approximately 700 MPa) after press hardening. This combination of steel is typically called a tailor-welded blank (TWB). Press hardened TWBs result in components that have tailored properties with regions of high strength and relatively low elongation in areas that require intrusion resistance and regions of lower strength and higher elongation in areas that require energy absorption.

**Summary**

The in-die cooling can be modified such that a relatively large fraction of retained austenite is maintained in one steel comprising the tailor-welded blank while another steel comprising the tailor-welded blank forms a microstructure of predominantly martensite after in-die cooling. The current process results in a tailor-welded blank composed of a high alloy steel that can exhibit very high strengths after press hardening-up to 2,000 MPa-and a lower alloyed steel that can exhibit more moderate strengths-approximately 900 MPa-and higher elongation. This more moderate strength and higher elongation may be the result of retained austenite present in the steel after press hardening.

**Brief Description of the Drawing**

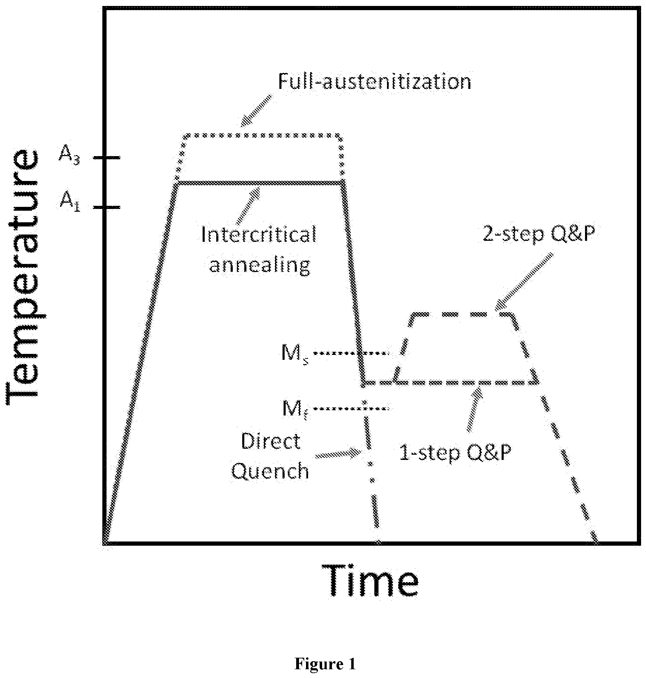

Fig. 1 shows a schematic time-temperature diagram showing the thermal profile after hot stamping.

**Detailed Description**

The present process can be used with any press hardened steels, hot press forming steels, hot stamping steels, or any other steel that is heated to an austenitizing temperature, formed, and then quenched in a stamping die to achieve the desired final properties of the stamped component.

The present process creates a tailor-welded blank comprised of a higher alloyed steel (Alloy A) and a lower alloyed steel (Alloy B). After press hardening, Alloy A forms a microstructure that exhibits much higher strength compared to Alloy B.

Alloy A and Alloy B can be made using conventional steel making, roughing, and finishing processes. In some embodiments, Alloy A and Alloy B may be bare or coated. In some embodiments, Alloy A and Alloy B are joined by laser welding to form a tailor-welded blank. During press hardening, the TWB is heated to temperatures above the lower critical temperature (Ac1) of Alloy A, transferred to a die, formed, and then cooled in the die to achieve the desired final properties. In some cases, the TWB may be heated to temperatures above the upper critical temperature (Ac3) of Alloy A, transferred to a die, formed, and then cooled in the die to achieve the desired final properties.

In embodiments of the present invention, conventional rapid cooling practice (that is, direct quenching) or a modified die cooling practice may be used such that the steels are rapidly cooled to a temperature between the martensite start and finish temperatures of Alloy B and held at this quenching temperature or at a higher temperature for relatively short times before cooling to room temperature, for example the holding time can last from a few seconds up to less than or equal to 240 seconds. Figure 1 compares a traditional press hardening cooling profile with the modified cooling profile. The modified profile has been described as quenching and partitioning (Q&P).

The Q&P process is described as full or partial austenitization followed by a rapid cooling to a specified quench temperature to partially transform austenite to martensite, and then holding at the quench temperature or reheating to an elevated temperature, a partitioning temperature, to allow carbon to diffuse out of martensite and into the remaining austenite, thus, stabilizing the austenite at room temperature.

Full or partial austenization will occur at temperatures above the $A_{c1}$ temperature , which is the temperature that corresponds to the boundary between the ferrite+cementite phase field and the austenite+ferrite or austenite+cementtite phase fields. It should be understood that in some embodiments the temperature may also include temperatures above the temperature at which ferrite completely transforms to austenite ($A_{c3}$) (e.g., the single phase, austenite region).

Next the steel sheet undergoes rapid cooling. The rapid cooling of the steel sheet is to some temperature below the martensite start temperature ($M_s$) for the steel sheet to a predetermined quench temperature. It should be understood that the cooling rate to $M_s$ may be high enough to transform at least some of the austenite formed previously to martensite. In other words, the cooling rate may be rapid enough to transform at least some austenite to martensite instead of other non-martensitic constituents such as ferrite, pearlite, or bainite which transform at relatively lower cooling rates.

The difference between the quench temperature and $M_s$ may vary depending on the individual composition of the steel sheet being used. However, in many embodiments the difference between quench temperature and $M_s$ may be sufficiently great to form an adequate amount of martensite to act as a carbon source to stabilize the austenite and avoid creating excessive "fresh" martensite upon final cooling. Additionally, quench temperature may be sufficiently high to avoid consuming too much austenite during the initial quench (e.g., to avoid excessive carbon enrichment of austenite greater than that required to stabilize austenite for the given embodiment) or consume too much austenite by transformation.

In many embodiments, the quench temperature may vary from about 200 °C to about 300 °C, although no such limitation is required. Additionally, quench temperature may be calculated for a given steel composition. For such a calculation, quench temperature corresponds to the retained austenite having an $M_s$ temperature of room temperature after partitioning.

Methods for calculating quench temperature are known in the art and described in J. G. Speer, A. M. Streicher, D. K. Matlock, F. Rizzo, and G. Krauss, "Quenching And Partitioning : A Fundamentally New Process to Create High Strength Trip Sheet Microstructures," Austenite Formation and Decomposition, pp. 505-522, 2003; and A. M. Streicher, J. G. J. Speer, D. K. Matlock, and B. C. De Cooman, "Quenching and Partitioning Response of a Si-Added TRIP Sheet Steel," in Proceedings of the International Conference on Advanced High Strength Sheet Steels for Automotive Applications, 2004.

The quench temperature may be sufficiently low (with respect to $M_s$) to form an adequate amount of martensite to act as a carbon source to stabilize the austenite and avoid creating excessive "fresh" martensite upon the final quench. Alternatively, the quench temperature may be sufficiently high to avoid consuming too much austenite during the initial quench and creating a situation where the potential carbon enrichment of the retained austenite is greater than that required for austenite stabilization at room temperature.

In some embodiments, a suitable quench temperature may correspond to the retained austenite having an $M_s$ temperature of room temperature after partitioning. Speer and Streicher *et al.* (above) have provided calculations that provide guidelines to explore processing options that may result in desirable microstructures. Such calculations assume idealized full partitioning, and may be performed by applying the Koistinen-Marburger (KM) relationship twice ($f_m = 1 - e^{-1.1 \times 10^{-2}(\Delta T)}$) - first to the initial quench to quench temperature and then to the final quench at room temperature (as further described below). The Ms temperature in the KM expression can be estimated using empirical formulae based on austenite composition (such as that of the modified form of Andrew's linear expression as modified by Mahieu et al.):

$$\text{Eqtn 1: } Ms(°C) = 539 - 423C - 30.4Mn - 7.5Si + 30Al$$

The result of the calculations described by Speer et al. may indicate a quench temperature which may lead to a maximum amount of retained austenite. For quench temperatures above the temperature having a maximum amount of retained austenite, significant fractions of austenite are present after the initial quench; however, there is not enough martensite to act as a carbon source to stabilize this austenite. Therefore, for the higher quench temperatures, increasing amounts of fresh martensite form during the final quench. For quench temperatures below the temperature having a maximum amount of retained austenite, an unsatisfactory amount of austenite may be consumed during the initial quench and there may be an excess amount of carbon that may partition from the martensite.

Once the quench temperature is reached, the temperature of the steel sheet is either increased relative to the quench temperature or maintained at the quench temperature for a given period of time. In particular, this stage may be referred to as the partitioning stage. In such a stage, the temperature of the steel sheet is at least maintained at the quench temperature to permit carbon diffusion from martensite formed during the rapid cooling and into any remaining austenite. Such diffusion may permit the remaining austenite to be stable (or meta-stable) at room temperature, thus improving the mechanical properties of the steel sheet.

In some embodiments, the steel sheet may be heated above $M_s$ to a relatively high partitioning temperature and thereafter held at the high partitioning temperature.

A variety of methods may be utilized to heat the steel sheet during this stage. By way of example only, the steel sheet may be heated using radiant or convection heating, induction heating, torch heating, and/or the like. Alternatively, in other embodiments, the steel sheet may be heated but to a different, lower partitioning temperature which is slightly below $M_s$. The steel sheet may then be likewise held at the lower partitioning temperate for a certain period of time. In still a third alternative embodiment, another alternative partitioning temperature may be used where the steel sheet is merely maintained at the quench temperature. Of course, any other suitable partitioning temperature may be used as will be apparent to those of ordinary skill in the art in view of the teachings herein.

After the steel sheet has reached the desired partitioning temperature, the steel sheet is maintained at the desired partitioning temperature for a sufficient time to permit partitioning of carbon from martensite to austenite. The steel sheet may then be cooled to room temperature.

The quench and partition process is described in U.S. Patent Application Serial No. 14/280,045, filed May 16, 2014, or in Bruno C. et al. "Quench and Partitioning Steel: A New AHSS Concept for Automotive Anti-Intrusion Applications", pp. 634-640, STEEL RESEARCH INT. - Verlag Stahleisen GmbH, Düsseldorf, 01.06.2006, XP055534234 as well as in Kim S. J. et al. "Dilatometric study of the Quench and Partitioning (Q&P) process", pp. 73-83, AIST Steel Properties & Applications Conference proceedings: combined with MS & T'07, Materials science and technology 2007, September 16-20, Detroit, USA, XP009182792.

In the present process, the TWB is transferred to the stamping die and formed after the end of the full-austenitization or intercritical annealing sequence. The TWB can then be directly quenched in the die or undergo a 1-step or a 2-step quenching and partitioning treatment.

Carbon is added to reduce the martensite start temperature, provide solid solution strengthening, and to increase the hardenability of the steel. Carbon is an austenite stabilizer. In certain embodiments of Alloy A, carbon can be present in concentrations of 0.1 - 0.50 weight %; in other embodiments, carbon can be present in concentrations of 0.1 - 0.35 weight %; and in still other embodiments, carbon can be present in concentrations of about 0.22 - 0.25 weight %. In certain embodiments of Alloy B, carbon can be present in concentrations of 0.15 - 0.5 weight %, and in still other embodiments, carbon can be present in concentrations of 0.15 - 0.4 weight %.

Manganese is added to reduce the martensite start temperature, provide solid solution strengthening, and to increase the hardenability of the steel. Manganese is an austenite stabilizer. In certain embodiments of Alloy A, manganese can be present in concentrations of 2.0 - 8.0 weight %; in other embodiments, manganese can be present in concentrations of 2.0 - 5.0 weight %; in still other embodiments, manganese can be present in concentrations of greater than 3.0 weight % - 8.0 weight %; and in still other embodiments, manganese can be present in concentrations of greater than 3.0 weight % -5.0 weight %. In certain embodiments of Alloy B, manganese can be present in concentrations of 1.0 - 4.0 weigh %; in other embodiments, manganese can be present in concentrations of 1.5 - 4 weight %; and in other embodiments, manganese can be present in concentrations of 1.0 - 3.0 weight %.

Silicon is added to provide solid solution strengthening. Silicon is a ferrite stabilizer. Silicon retards cementite formation during partitioning. In certain embodiments of Alloy A, silicon can be present in concentrations of 0.1 - 0.5 weight %; in other embodiments, silicon can be present in concentrations of 0.2 - 0.3 weight %. In certain embodiments of Alloy B, silicon can be present in concentrations of 2.0 weight percent or less.

Molybdenum is added to provide solid solution strengthening, to increase the hardenability of the steel, to provide microstructural refinement, and to protect against embrittlement. In certain embodiments of Alloy A, molybdenum can be present in concentrations of 0-2.0 weight %; in other embodiments, molybdenum can be present in concentrations of 0.0-0.6 weight %; in still other embodiments, molybdenum can be present in concentrations of 0.1 - 2.0 weight %; in other embodiments, molybdenum can be present in concentrations of 0.1 - 0.6 weight %; and in yet other embodiments, molybdenum can be present in concentrations of 0.4 - 0.5 weight %. In certain embodiments of Alloy B, molybdenum can be present in concentrations of 0.0 - 0.5 weight %.

Chromium can be added to reduce the martensite start temperature, provide solid solution strengthening, and increase the hardenability of the steel. Chromium is a ferrite stabilizer. In certain embodiments of Alloy A, chromium can be present in concentrations of 0 - 6.0 weight %; in other embodiments, chromium can be present in concentrations of 2.0 - 6.0 weight %; in other embodiments, chromium can be present in concentrations of 0.2 - 6.0 weight %; and in other embodiments chromium can be present in concentrations of 0.2 - 3.0 weight %. In certain embodiments of Alloy B, chromium can be present in concentrations of 0.0 - 0.7 weight %.

Aluminum is primarily added to retard cementite formation during partitioning. Aluminum is a ferrite stabilizer. In certain embodiments of Alloy B, aluminum can be present in concentrations of 0-2 weight %; in other embodiments, aluminum can be present in concentrations of 0.5-2 weight %, and in other embodiments, aluminum can be present in concentrations of 1-2 weight %. In certain embodiments of Alloy B, aluminum can be present in concentrations of 2.0 weight % or less.

Niobium can be added to increase strength and improve hardenability of the steel. In some embodiments niobium can also be added to provide improved grain refinement. In certain embodiments of Alloy A, niobium can be present in concentrations of 0 - 0.1 weight %; in other embodiments, niobium can be present in concentrations of 0.01 - 0.1 weight %; and in other embodiments, niobium can be present in concentrations of 0.001 - 0.055 weight %. In certain embodiments of Alloy B, niobium can be present in concentrations of 0.0 - 0.05 weight %.

Vanadium can be added to increase strength and improve hardenability of the steel. In certain embodiments of Alloy A, vanadium can be present in concentrations of 0 - 0.15 weight %; and in other embodiments, vanadium can be present in concentrations of 0.01 - 0.15 weight %. In certain embodiments of Alloy B, vanadium can be present in concentrations of 0.0 - 0.05 weight %.

Boron can be added to increase the hardenability of the steel. In certain embodiments of Alloy A, boron can be present in concentrations of 0 - 0.005 weight %.

Titanium can be added to increase the strength of the steel, to control austenite grain size, and to control free nitrogen. In certain embodiments of Alloy B, titanium can be present in concentrations of 0.00 - 0.05 weight %.

The press hardened steels can be processed using conventional steel making, roughing, and finishing processes. For example, the steels of Alloy A and Alloy B may each be continuously cast to produce slabs approximately 12-25 cm in thickness. Slabs may then be reheated at temperatures of 1200-1320 °C, and hot rolled to a final gauge of ≥2.5 mm, with the final reduction pass occurring at a temperature of approximately 950 °C. Steels may then be coiled at temperatures of 400-675 °C. After cooling, the steel coils may be annealed at temperatures of 600-900 °C for times longer than 1 second, and pickled, prior to cold reduction. One or more intermediate annealing and reduction steps may be required before reaching the desired thickness. Such intermediate annealing utilizes temperatures similar to the first annealing treatment.

The alloys of the present application can also be coated with an aluminum-based coating, a zinc-based coating (either galvanized or galvannealed), after cold rolling and before hot stamping. Such coating can be applied to the steel sheet using processes known in the art, including hot dip coating or electrolytic coating. Because of the lower critical temperatures, press hardening of the present alloys after they have been coated is less likely to result in melting of the coating and the detrimental effects associated with such melting.

Alloy A employs a novel alloying strategy that uses substitutional elements to increase the strength of martensite through a combination of substitutional solute strengthening and a reduction in softening that results from autotempering. Softening as a result of autotempering is minimized by suppression of the martensite start temperature through alloying. As a result of the increased hardenability in the proposed compositions that results from various additions of manganese, chromium, molybdenum, and niobium, the novel compositions permit a boron-free press hardening steel. As a result of the increased hardenability, Alloy A forms a predominantly martensite microstructure on cooling after direct quenching or after the modified cooling profile (that is, after a quenching and partitioning thermal treatment).

Alloy B employs an alloying strategy such that the intercritical temperature of this alloy may overlap temperatures corresponding to full austenitization of the higher alloyed Alloy A. Additionally, in some embodiments, silicon or aluminum (or some combination thereof) are added to Alloy B in order to minimize carbide formation during the isothermal hold after the first quenching to a temperature between the martensite start and martensite finish ($M_f$) temperatures of Alloy B. The $M_s$ and $M_f$ can be determined using relationships such as the modified Andrews linear equation and KM relationship previously mentioned or empirically using methods such as dilatometry. As a result, after press hardening using the modified cooling profile, the microstructure of Alloy B is a mixture of some combination of ferrite, bainite, martensite, and retained austenite.

**Example 1**

A tailor-welded blank is made of a steel of Alloy A welded to a steel of Alloy B, wherein Alloy A and Alloy B contain the compositions set forth in Table 1 below (wherein the balance comprises Fe and impurities associated with steelmaking):

Table 1 - Chemical Composition (in weight percent) for Alloys A and B

| Alloy | C | Si | Mn | Cr | Mo | V | Nb | Ti | B | Al |
|---|---|---|---|---|---|---|---|---|---|---|
| A | 0.10-0.50 | 0.1-0.5 | 2.0-8.0 | 0.00-6.0 | 0-2.0 | 0-0.15 | 0-0.1 | - | 0-0.005 | |
| B | 0.15-0.5 | 2 or less | 1-3 | 0-0.70 | 0-0.50 | 0-0.05 | 0-0.05 | 0.0-0.05 | - | 2 or less |

Process A: A blank is formed from a steel of Alloy A and a steel of Alloy B. The two steels are welded together. The welded blank is heated to a temperature above the Ac1 temperature associated with the steel of Alloy A. The blank is transferred to a forming die. The blank is then cooled to a quench temperature between the martensite start temperature and martensite finish temperature of the steel of Alloy B. The blank is held at such temperature. The blank is cooled to room temperature.

Process B: A blank is formed from a steel of Alloy A and a steel of Alloy B. The two steels are welded together. The welded blank is heated to a temperature above the Ac3 temperature associated with the steel of Alloy A. The blank is transferred to a forming die. The blank is then cooled to a quench temperature between the martensite start temperature and martensite finish temperature of the steel of Alloy B. The blank is held at such temperature. The blank is cooled to room temperature.

Process C: A blank is formed from a steel of Alloy A and a steel of Alloy B. The two steels are welded together. The welded blank is heated to a temperature above the Ac1 temperature associated with the steel of Alloy A. The blank is transferred to a forming die. The blank is then cooled to a quench temperature between the martensite start temperature and martensite finish temperature of the steel of Alloy B. The blank is reheated to a partitioning temperature greater than the quench temperature held at such temperature. The blank is cooled to room temperature.

Process D: A blank is formed from a steel of Alloy A and a steel of Alloy B. The two steels are welded together. The welded blank is heated to a temperature above the Ac3 temperature associated with the steel of Alloy A. The blank is transferred to a forming die. The blank is then cooled to a quench temperature between the martensite start temperature and martensite finish temperature of the steel of Alloy B. The blank is reheated to a partitioning temperature greater than the quench temperature held at such temperature. The blank is cooled to room temperature.

Example 2

A tailor-welded blank in accordance with the tailor-welded blank of Example 1, or any or more of the following examples, wherein the carbon concentration in Alloy A is 0.1 - 0.35 weight %, and alternatively 0.22 - 0.25 weigh %.

Example 3

A tailor-welded blank in accordance with the tailor-welded blank of one or more of Example 1 or 2, or any or more of the following examples, wherein the carbon concentration in Alloy B is 0.15 - 0.4 weight %.

Example 4

A tailor-welded blank in accordance with the tailor-welded blank of any one or more of Examples 1 - 3, or any one or more of the following examples, wherein the manganese concentration in Alloy A is 2.0 - 5.0 weight %; alternatively, 3.0 weight % - 8.0 weight %; or alternatively 3.0 weight % -5.0 weight %.

Example 5

A tailor-welded blank in accordance with the tailor-welded blank of any one or more of Examples 1 - 4, or any one or more of the following examples, wherein the manganese concentration in Alloy B is 1.5 - 4 weight %.

Example 6

A tailor-welded-blank in accordance with the tailor-welded blank of any one or more of Examples 1-5, or any one or more of the following examples, wherein the silicon concentration in Alloy A is 0.2 - 0.3 weight %.

Example 7

A tailor-welded blank in accordance with the tailor-welded blank of any one or more of Examples 1-6, or any one or more of the following examples, wherein the molybdenum concentration in Alloy A is 0.0-0.6 weight %; alternatively, 0.1 - 2.0 weight %; alternatively, 0.1 - 0.6 weight %; or alternatively 0.4 - 0.5 weight %.

Example 8

A tailor-welded blank in accordance with the tailor-welded blank of any one or more of Examples 1 - 7, or any one or more of the following examples, wherein the chromium concentration in Alloy A is 2.0 - 6.0 weight %; alternatively, 0.2 - 6.0 weight %; or alternatively 0.2 - 3.0 weight %.

Example 9

A tailor-welded blank in accordance with the tailor-welded blank of any one or more of Examples 1-8, or any one or more of the following examples, wherein the niobium concentration in Alloy A is 0.01 - 0.1 weight %; or alternatively 0.001 - 0.055 weight %.

Example 10

A tailor-welded blank in accordance with the tailor-welded blank of any one or more of Examples 1-9, or any one or more of the following examples, wherein the vanadium concentration in Alloy A is 0.01-0.15 weight %.

Example 11

A tailor-welded blank in accordance with the tailor-welded blank of any one or more of Examples 1-10, or any one or more of the following examples, wherein Alloy A is coated with aluminum or zinc, or alloys thereof.

Example 12

A tailor-welded blank in accordance with the tailor-welded blank of any one or more of the Examples 1-11, wherein Alloy B is coated with aluminum or zinc, or alloys thereof.

**Claims**

1. A tailor-welded blank comprising Alloy A and Alloy B, wherein Alloy A comprises 0.10 - 0.50 wt % C, 0.1 - 0.5 wt % Si, 2.0 - 8.0 wt % Mn, 0.00 - 6.0 wt% Cr, 0.0 - 2 wt% Mo, and 0.0 - 0.005 wt% B, optionally up to 0.1 wt % Nb and optionally up to 0.15 wt% V, the balance Fe and impurities associated with steelmaking, and wherein Alloy B comprises 0.15 - 0.5 wt% C, 2 wt% or less Si, 1.0 - 4.0 wt% Mn, 0.0 - 0.70 wt% Cr, 0.0 - 0.5 wt% Mo, 0.0 - 0.05 wt% V, 0.0 - 0.05 wt% Nb, 0.0 - 0.05 wt% Ti, and 2 wt% or less Al, the balance Fe and impurities associated with steelmaking, and wherein said tailor-welded blank is subject to a quench and partition thermal cycle in a forming die; and wherein the tensile strength of Alloy A is greater than the tensile strength of Alloy B.

2. The tailor-welded blank in accordance with Claim 1, wherein the carbon concentration in Alloy A is 0.1 - 0.35 weight %.

3. The tailor-welded blank in accordance with Claim 1, wherein the carbon concentration in Alloy B is 0.15 - 0.4 weight %.

4. The tailor-welded blank of Claim 1, wherein the manganese concentration in Alloy A is 2.0 - 5.0 weight %.

5. The tailor-welded blank of Claim 1, wherein the manganese concentration in Alloy A is 3.0 weight % - 8.0 weight %.

6. The tailor-welded blank of Claim 1, wherein the manganese concentration in Alloy B is 1.5 - 4 weight %.

7. The tailor-welded-blank of Claim 1, wherein the silicon concentration in Alloy A is 0.2 - 0.3 weight %.

8. The tailor-welded blank of Claim 1, wherein the molybdenum concentration in Alloy A is 0.0 - 0.6 weight %

9. The tailor-welded blank of Claim 1, wherein the molybdenum concentration in Alloy A is 0.1 - 2.0 weight %.

10. The tailor-welded blank of Claim 1, wherein the chromium concentration in Alloy A is 2.0 - 6.0 weight %.

11. The tailor-welded blank of Claim 1, wherein the chromium concentration in Alloy A is 0.2 - 6.0 weight %.

12. The tailor-welded blank of Claim 1, wherein the niobium concentration in Alloy A is 0.01 - 0.1 weight %.

13. The tailor-welded blank of Claim 1, wherein the vanadium concentration in Alloy A is 0.01 - 0.15 weight %.

14. The tailor-welded blank of Claim 1, wherein Alloy A is coated with aluminum, zinc, or alloys thereof.

15. The tailor-welded blank of Claim 1, wherein Alloy B is coated with aluminum, zinc, or alloys thereof.

16. A process for forming the tailor-welded blank of claim 1 comprising the steps of forming a blank the steel of Alloy A and the steel of Alloy B, welding said two steels together, heating said welded blank to a temperature above the Ac1 temperature associated with the steel of Alloy A; transferring said heated blank to a forming die, cooling said blank to a quench temperature between the martensite start temperature and martensite finish temperature of the

8

EP 3 704 276 B1

steel of Alloy B, holding said blank at said quench temperature, cooling said blank to room temperature.

17. A process for forming the tailor-welded blank of claim 1 comprising the steps of forming a blank the steel of Alloy A and the steel of Alloy B, welding said two steels together, heating said welded blank to a temperature above the Ac1 temperature associated with the steel of Alloy A; transferring said heated blank to a forming die, cooling said blank to a quench temperature between the martensite start temperature and martensite finish temperature of the steel of Alloy B, reheating said blank to a partition temperature that is greater than the quench temperature, holding said blank at said partition temperature, cooling said blank to room temperature.

**Patentansprüche**

1. Maßgeschneiderter geschweißter Rohling, umfassend Legierung A und Legierung B, wobei Legierung A 0,10 - 0,50 Gew.-% C, 0,1 - 0,5 Gew.-% Si, 2,0 - 8,0 Gew.-% Mn, 0,00 - 6,0 Gew.-% Cr, 0,0 - 2 Gew.-% Mo und 0,0 - 0.005 Gew.-% B, gegebenenfalls bis zu 0,1 Gew.-% Nb und gegebenenfalls bis zu 0,15 Gew.-% V, Rest Fe und mit der Stahlherstellung verbundene Verunreinigungen umfasst, und wobei die Legierung B 0,15 - 0,5 Gew.-% C, 2 Gew.-% oder weniger Si, 1. 0 - 4,0 Mn, 0,0 - 0,70 Gew.-% Cr, 0,0 - 0,5 Gew.-% Mo, 0,0 - 0,05 Gew.-% V, 0,0 - 0,05 Gew.-% Nb, 0,0 - 0,05 Gew.-% Ti und 2 Gew.-% oder weniger Al, Rest Fe und Verunreinigungen, die mit der Stahlherstellung verbunden sind, umfasst, und wobei der maßgeschneiderte geschweißte Rohling einem thermischen Abschreck- und Teilungszyklus in einem Formwerkzeug unterzogen wird; und wobei die Zugfestigkeit von Legierung A größer ist als die Zugfestigkeit von Legierung B.

2. Maßgeschneiderter geschweißter Rohling nach Anspruch 1, wobei die Kohlenstoffkonzentration in Legierung A 0,1 - 0,35 Gew.-% beträgt.

3. Maßgeschneiderter geschweißter Rohling nach Anspruch 1, wobei die Kohlenstoffkonzentration in der Legierung B 0,15 - 0,4 Gew.-% beträgt.

4. Maßgeschneiderter geschweißter Rohling nach Anspruch 1, wobei die Mangankonzentration in Legierung A 2,0 - 5,0 Gew.-% beträgt.

5. Maßgeschneiderter geschweißter Rohling nach Anspruch 1, wobei die Mangankonzentration in Legierung A 3,0 bis 8,0 Gew.-% beträgt.

6. Maßgeschneiderter geschweißter Rohling nach Anspruch 1, wobei die Mangankonzentration in Legierung B 1,5 - 4 Gew.-% beträgt.

7. Maßgeschneiderter geschweißter Rohling nach Anspruch 1, bei dem die Siliziumkonzentration in Legierung A 0,2 - 0,3 Gew.-% beträgt.

8. Maßgeschneiderter geschweißter Rohling nach Anspruch 1, wobei die Molybdänkonzentration in Legierung A 0,0 -0,6 Gew.-% beträgt.

9. Maßgeschneiderter geschweißter Rohling nach Anspruch 1, wobei die Molybdänkonzentration in Legierung A 0,1 bis 2,0 Gew.-% beträgt.

10. Maßgeschneiderter geschweißter Rohling nach Anspruch 1, wobei die Chromkonzentration in Legierung A 2,0 - 6,0 Gew.-% beträgt.

11. Maßgeschneiderter geschweißter Rohling nach Anspruch 1, wobei die Chromkonzentration in Legierung A 0,2 - 6,0 Gew.-% beträgt.

12. Maßgeschneiderter geschweißter Rohling nach Anspruch 1, wobei die Niobkonzentration in Legierung A 0,01 - 0,1 Gew.-% beträgt.

13. Maßgeschneiderter geschweißter Rohling nach Anspruch 1, wobei die Vanadiumkonzentration in Legierung A 0,01 - 0,15 Gew.-% beträgt.

**14.** Maßgeschneiderter geschweißter Rohling nach Anspruch 1, wobei die Legierung A mit Aluminium, Zink oder deren Legierungen beschichtet ist.

**15.** Maßgeschneiderter geschweißter Rohling nach Anspruch 1, wobei Legierung B mit Aluminium, Zink oder deren Legierungen beschichtet ist.

**16.** Verfahren zum Herstellen des maßgeschneiderten geschweißten Rohlings nach Anspruch 1, das die folgenden Schritte umfasst: Herstellen eines Rohlings aus dem Stahl der Legierung A und dem Stahl der Legierung B, Zusammenschweißen der beiden Stähle, Erwärmen des geschweißten Rohlings auf eine Temperatur oberhalb der Ac1-Temperatur, die dem Stahl der Legierung A zugeordnet ist, Überführen des erhitzten Rohlings in eine Form, Abkühlen des Rohlings auf eine Abschrecktemperatur zwischen der Martensit-Starttemperatur und der Martensit-Endtemperatur des Stahls der Legierung B, Halten des Rohlings bei der Abschrecktemperatur, Abkühlen des Rohlings auf Raumtemperatur.

**17.** Verfahren zum Herstellen des maßgeschneiderten geschweißten Rohlings nach Anspruch 1, das die folgenden Schritte umfasst: Herstellen eines Rohlings aus dem Stahl von Alloy A und dem Stahl von Alloy B, Zusammenschweißen der beiden Stähle, Erhitzen des geschweißten Rohlings auf eine Temperatur oberhalb der Ac1-Temperatur, die dem Stahl von Legierung A zugeordnet ist; Überführen des erwärmten Rohlings in ein Formwerkzeug, Abkühlen des Rohlings auf eine Abschrecktemperatur zwischen der Martensit-Starttemperatur und der Martensit-Endtemperatur des Stahls der Legierung B, Wiedererwärmen des Rohlings auf eine Teilungstemperatur, die höher ist als die Abschrecktemperatur, Halten des Rohlings auf der Teilungstemperatur, Abkühlen des Rohlings auf Raumtemperatur.

**Revendications**

**1.** Ébauche soudée sur mesure comprenant un alliage A et un alliage B, dans laquelle l'alliage A comprend 0,10 à 0,50 % en poids de C, 0,1 à 0,5 % en poids de Si, 2,0 à 8,0 % en poids de Mn, 0,00 à 6,0 % en poids de Cr, 0,0 à 2 % en poids de Mo, et 0,0 à 0,005 % en poids de B, facultativement jusqu'à 0,1 % en poids de Nb et facultativement jusqu'à 0,15 % en poids de V, le reste étant Fe et des impuretés associées à la fabrication de l'acier, et dans laquelle l'alliage B comprend 0,15 à 0,5 % en poids de C, 2 % en poids ou moins de Si, 1,0 à 4,0 % en poids de Mn, 0,0 à 0,70 % en poids de Cr, 0,0 à 0,5 % en poids de Mo, 0,0 à 0,05 % en poids de V, 0,0 à 0,05 % en poids de Nb, 0,0 à 0,05 % en poids de Ti, et 2 % en poids ou moins d'Al, le reste étant Fe et des impuretés associées à la fabrication de l'acier, et dans laquelle ladite ébauche soudée sur mesure est soumise à un cycle thermique de trempe et de séparation dans une matrice de formage ;
et dans laquelle la résistance à la traction de l'alliage A est supérieure à la résistance à la traction de l'alliage B.

**2.** Ébauche soudée sur mesure selon la revendication 1, dans laquelle la concentration en carbone dans l'alliage A est de 0,1 à 0,35 % en poids.

**3.** Ébauche soudée sur mesure selon la revendication 1, dans laquelle la concentration en carbone dans l'alliage B est de 0,15 à 0,4 % en poids.

**4.** Ébauche soudée sur mesure selon la revendication 1, dans laquelle la concentration en manganèse dans l'alliage A est de 2,0 à 5,0 % en poids.

**5.** Ébauche soudée sur mesure selon la revendication 1, dans laquelle la concentration en manganèse dans l'alliage A est de 3,0 % en poids à 8,0 % en poids.

**6.** Ébauche soudée sur mesure selon la revendication 1, dans laquelle la concentration en manganèse dans l'alliage B est de 1,5 à 4 % en poids.

**7.** Ébauche soudée sur mesure selon la revendication 1, dans laquelle la concentration en silicium dans l'alliage A est de 0,2 à 0,3 % en poids.

**8.** Ébauche soudée sur mesure selon la revendication 1, dans laquelle la concentration en molybdène dans l'alliage A est de 0,0 à 0,6 % en poids.

9. Ébauche soudée sur mesure selon la revendication 1, dans laquelle la concentration en molybdène dans l'alliage A est de 0,1 à 2,0 % en poids.

10. Ébauche soudée sur mesure selon la revendication 1, dans laquelle la concentration en chrome dans l'alliage A est de 2,0 à 6,0 % en poids.

11. Ébauche soudée sur mesure selon la revendication 1, dans laquelle la concentration en chrome dans l'alliage A est de 0,2 à 6,0 % en poids.

12. Ébauche soudée sur mesure selon la revendication 1, dans laquelle la concentration en niobium dans l'alliage A est de 0,01 à 0,1 % en poids.

13. Ébauche soudée sur mesure selon la revendication 1, dans laquelle la concentration en vanadium dans l'alliage A est de 0,01 à 0,15 % en poids.

14. Ébauche soudée sur mesure selon la revendication 1, dans laquelle l'alliage A est revêtu d'aluminium, de zinc, ou d'alliages de ceux-ci.

15. Ébauche soudée sur mesure selon la revendication 1, dans laquelle l'alliage B est revêtu d'aluminium, de zinc, ou d'alliages de ceux-ci.

16. Procédé de formage de l'ébauche soudée sur mesure selon la revendication 1, comprenant les étapes de formation d'une ébauche à partir de l'acier de l'alliage A et de l'acier de l'alliage B, de soudage desdits deux aciers ensemble, de chauffage de ladite ébauche soudée à une température supérieure à la température Ac1 associée à l'acier de l'alliage A ; de transfert de ladite ébauche chauffée vers une matrice de formage, de refroidissement de ladite ébauche jusqu'à une température de trempe entre la température de début de martensite et la température de fin de martensite de l'acier de l'alliage B, de maintien de ladite ébauche à ladite température de trempe, de refroidissement de ladite ébauche jusqu'à température ambiante.

17. Procédé de formage de l'ébauche soudée sur mesure selon la revendication 1, comprenant les étapes de formation d'une ébauche à partir de l'acier de l'alliage A et de l'acier de l'alliage B, de soudage desdits deux aciers ensemble, de chauffage de ladite ébauche soudée à une température supérieure à la température Ac1 associée à l'acier de l'alliage A ; de transfert de ladite ébauche chauffée vers une matrice de formage, de refroidissement de ladite ébauche jusqu'à une température de trempe entre la température de début de martensite et la température de fin de martensite de l'acier de l'alliage B, de réchauffage de ladite ébauche à une température de séparation qui est supérieure à la température de trempe, de maintien de ladite ébauche à ladite température de séparation, de refroidissement de ladite ébauche jusqu'à température ambiante.

**Figure 1**

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62580662

- US 28004514

**Non-patent literature cited in the description**

- **J. G. SPEER ; A. M. STREICHER ; D. K. MATLOCK ; F. RIZZO ; G. KRAUSS.** Quenching And Partitioning : A Fundamentally New Process to Create High Strength Trip Sheet Microstructures. *Austenite Formation and Decomposition,* 2003, 505-522
- **A. M. STREICHER ; J. G. J. SPEER ; D. K. MATLOCK ; B. C. DE COOMAN.** Quenching and Partitioning Response of a Si-Added TRIP Sheet Steel. *Proceedings of the International Conference on Advanced High Strength Sheet Steels for Automotive Applications,* 2004

- **BRUNO C. et al.** Quench and Partitioning Steel: A New AHSS Concept for Automotive Anti-Intrusion Applications. STEEL RESEARCH INT. - Verlag Stahleisen GmbH, 01 June 2006, 634-640
- **KIM S. J. et al.** *Dilatometric study of the Quench and Partitioning (Q&P) process,* 73-83
- AIST Steel Properties & Applications Conference proceedings: combined with MS & T'07. *Materials science and technology,* 16 September 2007